# EUROPÄISCHE PATENTSCHRIFT

(11) **EP 1 293 759 B1**
(45) Veröffentlichungstag und Bekanntmachung des Hinweises auf die Patenterteilung: **01.03.2006**
(21) Anmeldenummer: 02017829.9
(22) Anmeldetag: 08.08.2002
(51) Int. Cl.: G01F 1/66, G01F 15/14, G01F 15/18

(54) **Vorrichtung zum Messen der Strömungsgeschwindigkeit und/oder des Durchflusses eines Fluids**
Apparatus for measuring the speed and/or the flow rate of a fluid
Dispositif de mesure de la vitesse et/ou du débit d'un fluide

(30) Priorität: 14.09.2001 DE 10145566
(43) Veröffentlichungstag der Anmeldung: 19.03.2003
(73) Patentinhaber: SICK Engineering GmbH, 01458 Ottendorf-Okrilla (DE)
(72) Erfinder: Ehrlich, Andreas, Dr., 01129 Dresden (DE); Schröter, Gerry, Dipl.-Ing., 01239 Dresden (DE)
(74) Vertreter: Ludewigt, Christoph

(56) Entgegenhaltungen:
- EP-A- 0 890 826
- DE-A- 4 439 399
- DE-A- 19 713 526
- PATENT ABSTRACTS OF JAPAN vol. 1997, no. 02, 28. Februar 1997 (1997-02-28) -& JP 08 271303 A (YAMATAKE HONEYWELL CO LTD), 18. Oktober 1996 (1996-10-18)
- PATENT ABSTRACTS OF JAPAN vol. 1997, no. 01, 31. Januar 1997 (1997-01-31) -& JP 08 240458 A (YAMATAKE HONEYWELL CO LTD), 17. September 1996 (1996-09-17)

## Beschreibung

Die Erfindung betrifft eine Vorrichtung zum Messen der Strömungsgeschwindigkeit und/oder des Durchflusses eines Fluids gemäß dem Oberbegriff des Anspruchs 1.

In der Prozessdurchflussmesstechnik werden unter anderem Ultraschallzähler für die Durchflussmessung eingesetzt. Diese bestehen im wesentlichen aus einem Messaufnehmer, der ein Rohrstück mit angeschweißten Anschlussflanschen umfasst, den Ultraschallwandlern, auch Ultraschallsonden genannt und die in dem Rohrstück des Messaufnehmers eingesetzt sind, sowie einer Signalverarbeitungseinheit zur Ansteuerung der Ultraschallsonden und Verarbeitung der von den Sonden abgegebenen Signale.

Das Messprinzip besteht in einer Detektion einer Laufzeitdifferenz zweier Ultraschallsignale, die in eine Richtung abgestrahlt bzw. empfangen werden, die einmal eine Komponente in Strömungsrichtung und einmal eine Komponente entgegen der Strömungsrichtung aufweist. Dazu müssen die Signale in einem bestimmten Winkel ungleich 90° zur Strömungsachse abgesendet bzw. empfangen werden.

Allen Ultraschallzählern ist gemeinsam, dass die in den Messaufnehmer schräg eingesetzten Sonden von dem eigentlich runden Rohrstück des Messaufnehmers abragen. Jede Sonde muss eine elektrische Verbindung mit der Signalverarbeitungseinheit haben, so dass von jeder abragenden Sonde ein oder mehrere Kabel weiter abragen und zur Signalverarbeitungseinheit im wesentlichen freiliegend verlegt sind. Aus Explosionsschutzgründen werden die Kabel zum Teil auch in separaten Röhren, die am Messaufnehmer zusätzlich angebracht sind, geführt.

Prozessdurchflussmessgeräte, wie der vorgenannte Ultraschallzähler, werden in rauhen Industrieumgebungen, z.B. in der chemischen Industrie, auf Erdgasförderfeldern, in Übergabestationen oder in Transmissionsleitungen eingesetzt. In diesen Umgebungen werden die Geräte, die je nach Nenndurchmesser ein erhebliches Gewicht haben können, mit schweren Geräten, wie Gabelstapler oder dergleichen, gehandhabt.

Ein derart rohe Handhabung birgt aber die Gefahr der Beschädigung oder Abriss der frei verlegten Kabel bei der Montage, Inspektion oder Wartung. Deshalb erfolgt der Einbau eines solchen Zählers häufig mit demontierten Kabeln, wodurch der Messaufnehmer mit seinen Flanschen besser zugänglich wird und das Ausfallrisiko durch Beschädigung oder Abriss von Kabeln vermindert wird. Allerdings erhöht sich dadurch der Montageaufwand erheblich mit den entsprechenden Kosten.

Aus der DE 44 39 399 A1 ist ein Ultraschall-Durchflussmesser bekannt, bei dem die Ultraschallwandler in einem Messrohr in Tangentialnuten aufgenommen sind und über Anschlussleitungen mit einem gemeinsamen Anschlussgehäuse verbunden sind. In einem ersten Ausführungsbeispiel ist das gesamte Messrohr inklusive der Tangentialnuten mit einer zylindrischen Kapsel zum Schutz gegen Wasser umschlossen und verschweißt. In einem weiteren Ausführungsbeispiel ist jedem einzelnen Wandler ein Anschlussgehäuse zugeordnet, dass sich direkt beim Wandler befindet. Anschlussleitungen für das Anschlussgehäuse werden über eine Öffnung aus dem Anschlussgehäuse geführt.

Aus der JP 08271303 und der JP 08240458 ist ein elektromagnetischer Durchflussmesser für Flüssigkeiten bekannt, bei dem auf dem Umfang eines Leitungsrohrs eine Reihe von Komponenten verteilt angeordnet sind, wie unter anderem eine Erregerspule und eine Elektrode. Die auf dem Leitungsrohr angeordneten Komponenten sind mit einer äußeren Hülle abgedeckt.

Aus der EP 0 890 826 A1 ist ein Ultraschall-Durchflussmesser für Flüssigkeiten bekannt, bei dem in einen Messaufnehmergehäuse in dem Durchlassweg ein herausnehmbarer Einsatz vorgesehen ist, mit dem die gesamte Messanordnung, bestehend aus Ultraschallwandlern und Reflektoren, herausgenommen werden kann. Der Einsatz bildet im eingesetzten Zustand den Durchlassweg.

Ausgehend von diesem Stand der Technik ist es Aufgabe der Erfindung, ein verbessertes Messgerät bereitzustellen, mit dem die vorgenannten Nachteile vermieden werden können und das einfach aufgebaut ist.

Diese Aufgabe wird gelöst durch eine Vorrichtung mit den Merkmalen des Anspruchs 1.

Erfindungsgemäß ist ein Bereich der Wandung des Messaufnehmers derart ausreichend stark ausgebildet, dass in der Wandung Bohrungen vorgesehen sind, durch die die elektrischen Verbindungen zwischen den Messkörpem und der Signalverarbeitungseinheit geführt sind, wobei jede Bohrung ein erstes nach außen offenes Ende im Bereich eines zugeordneten Messkörpers hat und ein zweites nach außen offenes Ende im Bereich der Signalverarbeitungseinheit hat.

Durch die Integration der Kabel in die Wandung des Mittelstück des Messaufnehmers, ist eine Führung für die Kabel gegeben, die eine einfache und optimal stabile verdeckte Führung gewährleistet.

Eine verdeckte Führung der elektrischen Verbindungsleitungen in dem Messaufnehmer, beispielsweise indem die Verbindungsleitungen in eine Wandung des Messaufnehmers integriert werden, hat den besonderen Vorteil, dass die Leitungen vor einer versehentlichen oder willentlichen Zerstörung komplett geschützt sind. Das Ausfallrisiko ist erheblich reduziert. Ein weiterer Vorteil verdeckter Kabel ist, dass die Handhabbarkeit des Durchflussmessgerätes erheblich verbessert ist, da keine störenden Kabel freiliegen. Wenn die Kabel vollständig, also auf ihrer ganzen Länge, verdeckt sind, was bevorzugt ist, ist ein maximaler Schutz der Kabel gegeben. Ein Anbringen der Kabel nach Montage der Messvorrichtung, z.B. in eine Gasleitung, kann entfallen, da die Vorrichtung mit vormontierten Kabeln montierbar ist. Des weiteren sind die Kabel vor Witterungs- und sonstigen Umwelteinflüssen, wie z.B. Wildverbiss, optimal geschützt, wodurch die Lebensdauer der Vorrichtung erhöht ist. Verdeckte Kabel sind vor diesen Einflüssen weitgehend geschützt.

Durch die zumindest bereichsweise Integration der Kabel in den Messaufnehmer und dem damit gegebenen Schutz, kann auf sonstige Schutzmaßnahmen, wie verstärkte Isolation der Kabel oder separate Schutzröhren, verzichtet werden, wodurch eine Kostenreduktion sowie eine vereinfachte Montage erreicht wird. Auch kann durch die verdeckte Führung der Kabel gegebenenfalls in kostengünstigerer und einfacherer Weise ein in den meisten Einsatzfällen notwendiger Explosionsschutz realisierbar sein.

Dadurch dass die Bohrungen sich von den Bereichen, in denen die Messkörper angeordnet sind, bis zu einem Anschlussbereich für die an dem Messaufnehmer befestigbare Signalverarbeitungseinheit erstrecken, ist ein kompletter optimaler Schutz der Kabel gegeben.

Um auf ein Schweißen, dass bei Präzisionsarbeiten sehr aufwendig ist, ein aufwendiges Prüfverfahren nach sich zieht und einen thermischen Verzug bewirken kann, verzichten zu können, sind das Mittelstück mit den Anschlussflanschen und den Messkörperaufnahmen einstückig ausgebildet.

Vorteilhafte Ausgestaltungen der Erfindung sind Gegenstand der abhängigen Ansprüche.

Die Kabel werden an die Messkörper, im weiteren auch Sonden genannt, angeschlossen, so dass sie zumindest in dem Anschlussreich nicht in den Messaufnehmer integriert sein können. Um auch hier einen Schutz zu haben, ist in Weiterbildung der Erfindung wenigstens eine Kappe vorgesehen, mit der der Messkörper und der Kabelanschlussbereich abdeckbar sind. Dadurch können insbesondere einfachere und damit kostengünstigere Anschlusskontakte eingesetzt werden, denn die Kontakte müssen keine besondere mechanische Stabilität oder keinen besonderen Schutz gegen Umwelteinflüsse bieten, da dieser durch die Kappe erfolgt.

Wenn die Bohrungen sich von dem mit der Kappe abgedeckten Bereich bis zu einem Anschlussbereich für die an dem Messaufnehmer befestigbare Signalverarbeitungseinheit erstrecken, ist ein kompletter optimaler Schutz der Kabel auf der vollen Länge gegeben.

Vorzugsweise ist der Messaufnehmer in einem Gießverfahren vorgefertigt. Das Gießverfahren kann vorteilhaft angewendet werden, wenn auf kompliziert auszuformende Stutzen komplett verzichtet werden kann. Ein derart monolithisch ausgebildeter Messaufnehmer muss dann lediglich durch mechanische Nachbearbeitung in die gewünschte Form gebracht werden, wobei die Nachbearbeitung an den Stellen des Messaufnehmers vorgenommen wird, an denen eine hohe Präzision und/oder eine Oberfläche mit definierter Rauheit erforderlich ist, wie beispielsweise die Positionierung von Messkörperaufnahmen.

In Weiterbildung der Erfindung weist der Messaufnehmer an seinem rohrartigen Mittelstück außenseitig wenigstens zwei, im wesentlichen ebene Aufnahmeflächen auf, die diametral gegenüberliegend ein Aufnahmeflächenpaar bilden. Durch die in den gegenüberliegenden Aufnahmeflächen angeordneten Messkörper ist ein Messpfad definiert. Die Aufnahmeflächen verlaufen zueinander parallel und sind in einem Winkel zu einer Längsachse des Mittelstücks angeordnet.

In dieser Ausbildung können gerade abstrahlende Ultraschallsonden eingesetzt werden, wobei in einfachster Weise durch die in einem Winkel zur Messaufnehmerachse angeordneten ebenen Aufnahmeflächen die exakte Abstrahl- bzw. Empfangsrichtung der Ultraschallsignale gewährleistet ist. Der Winkel ist dabei so gewählt, dass eine Präzisionsbearbeitung der Aufnahmeflächen noch problemlos an den Anschlussflanschen vorbei erfolgen kann und die in die Aufnahmeflächen eingesetzten Messkörper problemlos mit der Kappe abgedeckt werden können.

Des weiteren ist in dieser Anordnung der Aufnahmeflächen an einer aufnahmeflächenfreien Seite des Mittelstücks ausreichend Platz gehalten für die Anordnung der Signalverarbeitungseinheit. Es ist dann keine separate Halterung notwendig. Die Signalverarbeitungseinheit kann direkt an das Mittelstück des Messaufnehmers befestigt, beispielsweise geschraubt, werden. Die Kabel können dann direkt aus dem Messaufnehmer durch einen Fuß eines Gehäuses der Signalverarbeitungseinheit dieser zugeführt werden.

Bevorzugt wird diese Vorrichtung als Gaszähler eingesetzt.

Im Folgenden wird die Erfindung anhand eines Ausführungsbeispiels unter Bezugnahme auf die Zeichnung im Einzelnen erläutert. In der Zeichnung zeigen:
- Fig. 1.0: eine Ansicht einer erfindungsgemäßen Vorrichtung;
- Fig. 1.1: eine Seitenansicht eines Messaufnehmers der erfindungsgemäßen Vorrichtung mit einer Signalverarbeitungseinheit;

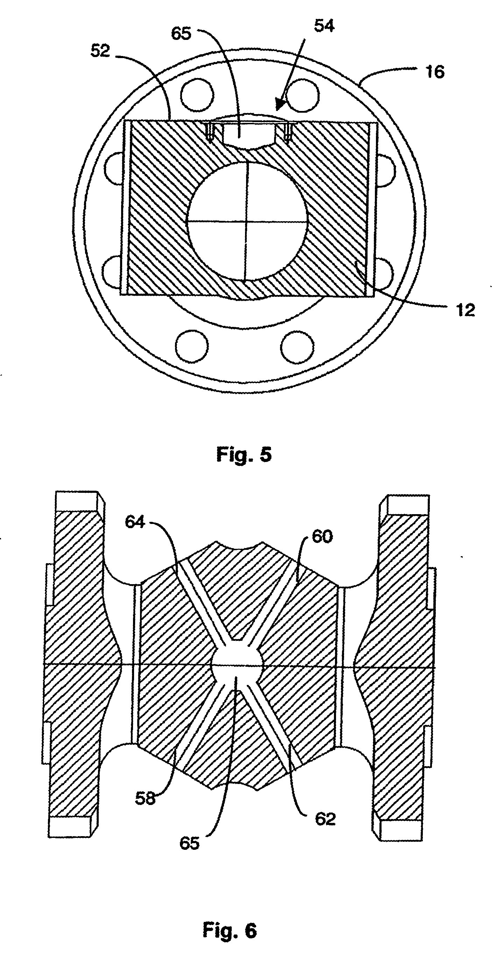

- Fig. 2: eine Draufsicht des Messaufnehmers aus Fig. 1.1;
- Fig. 3: einen Querschnitt entlang der Linien III-III aus Fig. 1.1 mit einem Messkörper;
- Fig. 4 bis 6: Querschnitte entlang der Linien IV-IV, V-V und VI-VI aus Fig. 1.1;
- Fig. 7: eine Ansicht einer Kappe;
- Fig. 8: einen Querschnitt der Kappe aus Fig. 7;

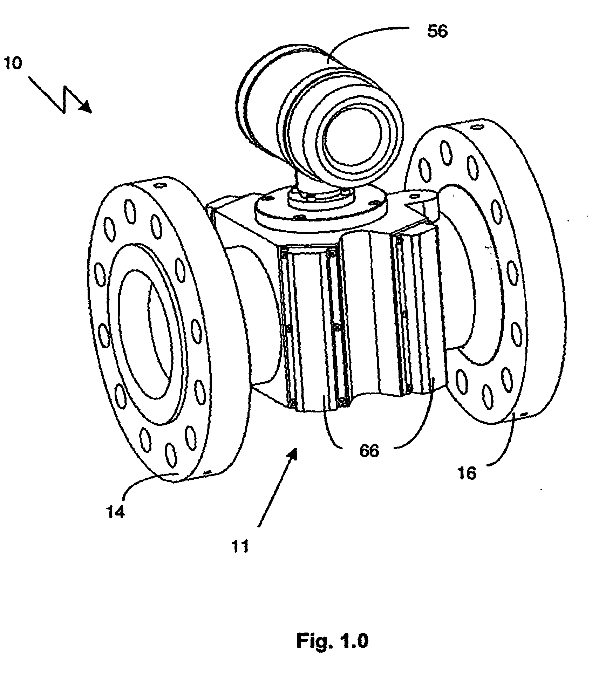

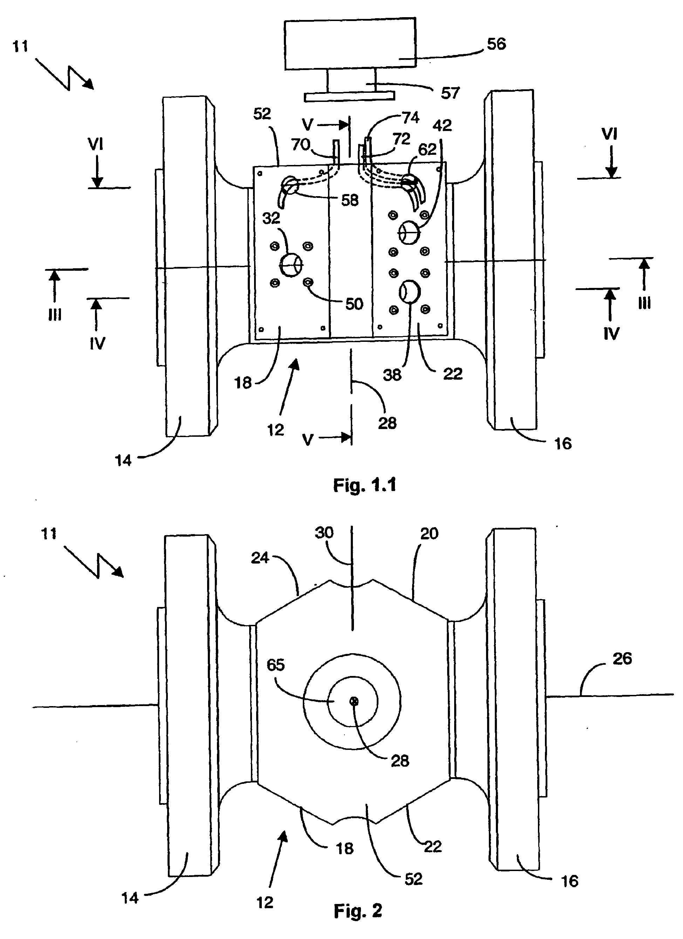

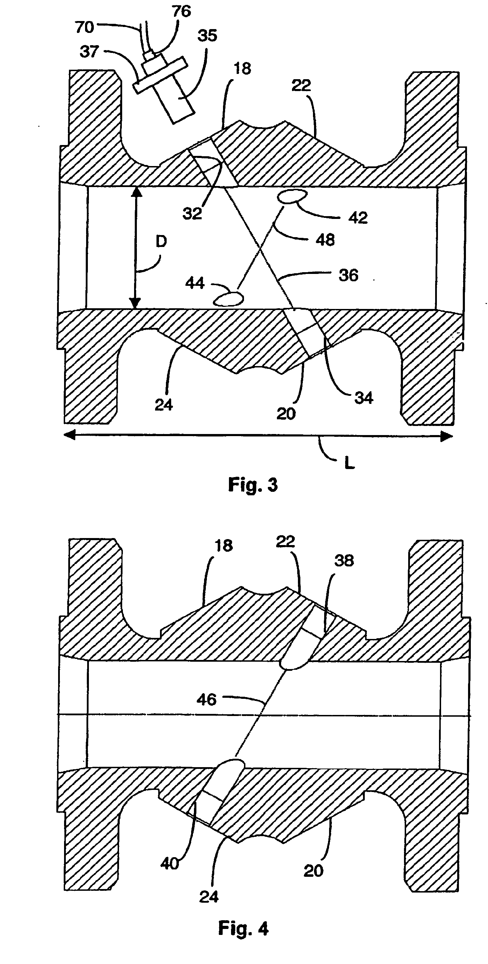

Eine erfindungsgemäße und in Fig. 1.0 dargestellte Vorrichtung 10 zum Messen der Strömungsgeschwindigkeit und/oder des Durchflusses eines Fluids weist einen Messaufnehmer 11 und eine Signalverarbeitungseinheit 56 auf. Wie weiter unten beschrieben wird, sind in dem Messaufnehmer 11 Messkörper, beispielsweise Ultraschallwandler, die im weiteren kurz Sonden genannt werden, eingesetzt, die über Verbindungskabel mit der Signalverarbeitungseinheit verbunden sind. Die Sonden und die Verbindungskabel sind in der Ansicht der Fig. 1.0 nicht zu erkennen, was auch Gegenstand der Erfindung ist, wie im Folgenden erläutert wird.

Der Messaufnehmer 11 weist ein rohrartiges Mittelstück 12 auf, das zwischen Anschlussflanschen 14 und 16 angeordnet ist. Das Mittelstück 12 ist in seinem Inneren vorzugsweise kreisrund mit einer Nennweite D ausgebildet entsprechend einer an die Anschlussflansche 14 und 16 anzuschließenden, nicht näher dargestellten Rohrleitung für ein Fluid.

Außenseitig weist das Mittelstück 12 wenigstens zwei und bevorzugt vier im wesentlichen ebene Aufnahmeflächen 18, 20, 22 und 24 auf, die sich paarweise parallel gegenüberliegen und so jeweils ein Aufnahmeflächenpaar 18-20 und 22-24 bilden. Die Aufnahmeflächen 18, 20, 22, 24 sind in einem Winkel zur Längsachse 26 des Mittelstücks 12, die auch die Messaufnehmerachse bildet, angeordnet. Die Aufnahmeflächenpaare 18-20 und 22-24 sind lediglich um eine Achse 28, die parallel zu den Aufnahmeflächen und senkrecht zur Längsachse 26 des Messaufnehmers 11 verläuft, verdreht angeordnet. Dadurch können die vier Aufnahmeflächen in bauraum- und materialsparender Anordnung vorgesehen sein.

In dem dargestellten Ausführungsbeispiel beträgt der Winkel zwischen einer Flächennormalen und der Längsachse 26 ca. 60°. Andere Winkel sind möglich. Der Winkel richtet sich danach, wie gut die Aufnahmefläche noch mit einem Bearbeitungswerkzeug erreicht werden kann und wie groß die Schräglage der weiter unten beschriebenen Messpfade sein soll.

In dieser Anordnung sind die in Längsrichtung benachbarten Aufnahmeflächen 18 und 22 bzw. 20 und 24 spiegelsymmetrisch zu einer senkrecht zur Längsachse 26 verlaufenden Mittelebene 30 angeordnet.

Bevorzugt beträgt die Länge L des Messaufnehmers 11 etwa das Dreifache der Nennweite D.

Die Aufnahmeflächen 18 und 20 weisen je eine Aufnahme 32 bzw. 34 auf, in die eine oben bereits erwähnte Sonde einsetzbar ist. In Fig. 3 ist eine solche Sonde schematisch bei dem Bezugszeichen 35 dargestellt. Die Aufnahmen 32 und 34 fluchten exakt miteinander, so dass die in die Aufnahmen 32 und 34 eingesetzten Sonden 35 zueinander ausgerichtet sind und einen Messpfad 36 definieren. Dabei senden und empfangen die Sonden den Ultraschall geradlinig in ihrer Längsrichtung entlang des Messpfads 36. Der Messpfad 36 schneidet in diesem Ausführungsbeispiel die Messaufnehmerachse 26.

Um auch in außermittigen Strömungsbereichen messen zu können, sind in den Aufnahmeflächen 22 und 24 entsprechende Aufnahmen 38 und 40 (Fig. 4) bzw. 42 und 44 vorgesehen, in die in gleicher Weise Sonden einsetzbar sind und so Messpfade 46 und 48 definieren, die nun außerhalb der Mitte des Rohrquerschnitts des Messaufnehmers 11 mit Abstand zur Messaufnehmerachse 26 verlaufen.

In dem dargestellten Ausführungsbeispiel sind insgesamt drei Messpfade 36, 46 und 48 geschaffen. Prinzipiell wäre es denkbar, dass weitere Messpfade in gleicher Weise vorgesehen sein können. Allerdings weisen die Sonden einen Befestigungsflansch 37 auf (Fig. 3), mit dem sie auf den Aufnahmeflächen 18, 20, 22 bzw. 24 festlegbar sind, wozu in den Aufnahmeflächen entsprechende Befestigungsmöglichkeiten, wie Gewindebohrungen 50 vorgesehen sind (Fig. 1.1). Entsprechend der Größe der Befestigungsflansche 37 können nur eine begrenzte Anzahl von Sonden auf einer Aufnahmefläche vorgesehen werden. Alternativ können die Sonden mit Überwurfmuttern in Gewindelöcher druckfest befestigt werden. In diesem Fall würde die Anzahl der Messpfade durch den Außendurchmesser der Überwurfmutter beschränkt.

An seiner Oberseite 52 ist der Messaufnehmer 11 abgeflacht ausgebildet und weist einen Befestigungsbereich 54 für die Signalverarbeitungseinheit 56 (Fig. 5 und 6). Die Aufnahmeflächen 18, 20, 22, 24 erstrecken sich bis an die Oberseite 52. Im Bereich der Oberseite 52 ist die Wandstärke des Mittelstücks 12 so dick ausgebildet ist, dass etwa parallel zur Oberfläche 52 und in der Wandung verlaufende Bohrungen 58, 60, 62 und 64 vorgesehen sind, die sich von den Aufnahmeflächen 18, 20, 22, 24 bis zu einer Vertiefung 65 in dem Befestigungsbereich 54 erstrecken (Fig. 5 und 6).

Durch diese Bohrungen 58, 60, 62, 64 und die Vertiefung 65 werden elektrische Verbindungskabel von der Signalverarbeitungseinheit 56 durch einen Befestigungsfuß 57 der Signalverarbeitungseinheit 56 zu den einzelnen Sonden geführt. Von diesen Verbindungskabeln sind in Fig. 1.1 beispielhaft drei dargestellt und mit den Bezugszeichen 70, 72 und 74 gekennzeichnet. Über die Verbindungskabel 70, 72, 74 werden einerseits die Sonden 35 elektrisch versogt und Signale mit der Signalverarbeitungseinheit 56 ausgetauscht. Die Signalverarbeitungseinheit 56 wird auch als Messumformer bezeichnet. In Fig. 3 ist eine der Sonden 35 dargestellt, an die das Verbindungskabel 70 über einen geeigneten Steckkontakt 76 angeschlossen ist.

Durch die Führung der Verbindungskabel 70, 72, 74 von der Signalverarbeitungseinheit 56 bis zu dem Austritt aus den Aufnahmeflächen 18, 20, 22, 24 durch die Wandung des Mittelstücks 12 und innerhalb des Befestigungsfußes 57 ist ein optimaler Schutz gegeben.

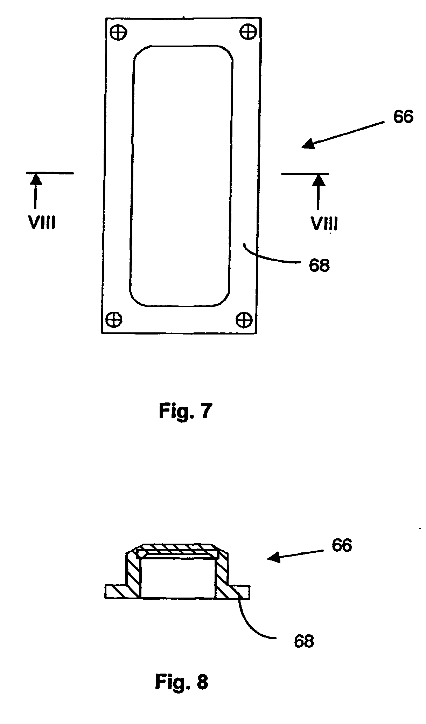

Um auch das noch freie Stück der Verbindungskabel 70, 72, 74 von dem Austritt aus den Aufnahmeflächen 18, 20, 22, 24 bis zu den Steckkontakten 76 zu schützen, sowie auch die Sonden 35 selbst zu schützen, ist für jede Aufnahmefläche 18, 20, 22, 24 eine Kappe 66 vorgesehen, mit der die Sonden und die freien Stücke der Verbindungskabel abdeckbar sind. Eine solche Kappe ist in den Fig. 7 und 8 im Einzelnen und in Fig. 1.0 im auf den Messaufnehmer 11 aufgesetzten Zustand dargestellt.

Die Kappen 66 können in geeigneter Weise, beispielsweise durch jeweils vier Schrauben, an das Mittelstück 12 festlegbar sein. Die Kappen 66 sind vorzugsweise derart dimensioniert, dass ihre Außenränder 68 entlang der Ränder der jeweiligen Aufnahmeflächen verlaufen und somit die Kappen 66 jeweils die gesamte Aufnahmefläche abdecken.

Der Messaufnehmer 11 ist einstückig ausgebildet, d.h. das Mittelstück 12 mit den Anschlussflanschen 14 und 16 und den Messkörperaufnahmen 32, 34, 38, 40, 42, 44 sind aus einem Stück Material gebildet und nicht durch Schweißen oder dergleichen Verbindung aus Einzelteilen zusammengesetzt. Bevorzugt wird der Messaufnehmer 11 in einem Gießverfahren vorgefertigt und anschließend werden die Bereiche, die präzise gefertigt sein müssen, wie z.B. die Aufnahmeflächen 18, 20, 22, 24 mit den Sondenaufnahmen 32, 34, 38, 40, 42 44 durch mechanische Bearbeitung präzise geformt.

Die komplette Vorrichtung ist in Fig. 1.0 dargestellt, in der besonders gut zu erkennen ist, dass keinerlei Kabel freiliegen. In der Ansicht nach Fig. 1.0 sind der Messaufnehmer 11 mit seinem Flanschen 14 und 16, die aufgesetzten Kappen 66 und die an dem Messaufnehmer 11 befestigte Signalverarbeitungseinheit 56 zu erkennen.

Der durch das Innere des Messaufnehmers 11 strömende Fluiddurchfluss wird bestimmt, indem die Laufzeitdifferenz der Ultraschallsignale in und entgegen der Strömungsrichtung gemessen wird und aus dieser Differenz die Strömungsgeschwindigkeit und damit der Durchfluss ausgerechnet wird. Die Ultraschallsonden 35 dienen dabei sowohl als Sender wie auch als Empfänger, so dass jeder Messpfad von den Ultraschallsignalen in beiden Richtungen genutzt wird.

Damit Inhomogenitäten im Strömungsprofil über den Querschnitt nicht das Ergebnis verfälschen, sind mehrere Messpfade 36, 46, 48 vorgesehen, die das Strömungsprofil an unterschiedlichen Stellen, also mit unterschiedlichem Abstand zur Messaufnehmerachse 26 durchwandern. Aus den Einzelergebnissen für die einzelnen Messpfade ergibt sich durch geeignete Integrationsverfahren der Durchfluss.

## Patentansprüche

1. Vorrichtung zum Messen der Strömungsgeschwindigkeit und/oder des Durchflusses eines Fluids mit einem Messaufnehmer (11), der Anschlussflansche (14, 16) zum Anschluss von Rohrleitungen für das Fluid und ein rohrartiges Mittelstück (12) aufweist, wobei an dem Mittelstück außenseitig wenigstens zwei Aufnahmen (32, 34, 38, 40, 42, 44) zur Aufnahme je eines als Ultraschallwandler ausgebildeten Messkörpers (35) vorgesehen sind und mit einer Signalverarbeitungseinheit (56), wobei das Mittelstück (12) einen Befestigungsbereich (54) für die Signalverarbeitungseinheit (56) aufweist und wobei elektrische Verbindungen (70, 72, 74) zwischen den Messkörpern (35) und der Signalverarbeitungseinheit (56) in dem Messaufnehmer verdeckt geführt sind und das Mittelstück (12) mit den Anschlussflanschen (14, 16) und den Messkörperaufnahmen (32, 34, 38, 40, 42, 44) einstückig ausgebildet ist, **dadurch gekennzeichnet, dass** ein Bereich der Wandung (76) des Mittelstücks (12) derart ausreichend stark ist, dass in diesem Bereich der Wandung (76) verlaufende Bohrungen (58, 60, 62, 64) vorgesehen sind, durch die die Verbindungen (70, 72, 74) geführt sind, wobei jede Bohrung (58, 60, 62, 64) ein erstes nach außen offenes Ende im Bereich eines zugeordneten Messkörpers (35) hat und ein zweites nach außen offenes Ende im Bereich der Signalverarbeitungseinheit (56) hat.

2. Vorrichtung nach Anspruch 1, **dadurch gekennzeichnet, dass** die Messkörper (35) mit wenigstens einer Kappe (66) abgedeckt sind, wobei die Kappe (66) vorzugsweise auch jeweils die zum Messkörper (35) zugehörige Verbindung (70 bzw. 72 bzw. 74) zumindest auf einem Teil ihrer Länge, nämlich vom Messkörper (35) bis zum ersten Ende der jeweiligen zugeordneten Bohrung (58, 60, 62, 64), abdeckt.

3. Vorrichtung nach einem der vorhergehenden Ansprüche, **dadurch gekennzeichnet, dass** der Messaufnehmer (11) in einem Gießverfahren vorgefertigt ist

4. Vorrichtung nach einem der vorhergehenden Ansprüche, **dadurch gekennzeichnet, dass** an dem Mittelstück (12) außenseitig wenigstens zwei, im wesentlichen ebene Aufnahmeflächen (18, 20 bzw. 22, 24) vorgesehen sind, in denen jeweils wenigstens eine der Messkörperaufnahmen (32, 34, 38, 40, 42, 44) vorgesehen ist und dass die Aufnahmeflächen (18, 20 bzw. 22, 24) diametral gegenüberliegend ein Aufnahmeflächenpaar bilden und durch die in den gegenüberliegenden Aufnahmeflächen angeordneten Messkörper (35) ein Messpfad (36, 46, 48) definiert ist und dass die Aufnahmeflächen (18, 20 bzw. 22, 24) zueinander parallel verlaufen und in einem Winkel zu einer Längsachse (26) des Mittelstücks (12) angeordnet sind.

5. Vorrichtung nach Anspruch 4 und Anspruch 2, **dadurch gekennzeichnet, dass** die Aufnahmefläche (18, 20, 22, 24) zusammen mit dem Messkörper (35) mit der Kappe (66) abgedeckt ist.

6. Verwendung der Vorrichtung nach einem der vorhergehenden Ansprüche als Gaszähler.

## Claims

1. Apparatus for measurement of the flow rate and/or of the throughflow of a fluid by means of a measurement sensor (11), which has connecting flanges (14, 16) for connection of pipelines for the fluid and has a tubular centre piece (12) with at least two holders (32, 34, 38, 40, 42, 44) for each holding a measurement body (35), which is in the form of an ultrasound transducer, being provided on the outside of the centre piece, and having a signal processing unit (56), with the centre piece (12) having an attachment area (54) for the signal processing unit (56), and with electrical connections (70, 72, 74) between the measurement bodies (35) and the signal processing unit (56) being routed such that they are concealed in the measurement sensor, and with the centre piece (12) being formed integrally with the connecting flanges (14, 16) and the measurement body holders (32, 34, 38, 40, 42, 44), **characterized in that** one area of the wall (76) of the centre piece (12) is sufficiently strong such that holes (58, 60, 62, 64) which run in this area of the wall (76) are provided, through which the connections (70, 72, 74) are passed, with each hole (58, 60, 62, 64) having a first end, which is open to the exterior, in the area of an associated measurement body (35), and having a second end, which is open to the exterior, in the area of the signal processing unit (56).

2. Apparatus according to Claim 1, **characterized in that** the measurement bodies (35) are covered by at least one cap (66), with the cap (66) preferably in each case also covering that connection (70, 72 or 74) which is associated with the measurement body (35) in each case, at least over a part of its length, specifically from the measurement body (35) to the first end of the respectively associated hole (58, 60, 62, 64).

3. Apparatus according to one of the preceding claims, **characterized in that** the measurement sensor (11) is prefabricated using a casting method.

4. Apparatus according to one of the preceding claims, **characterized in that** at least two essentially planar holding surfaces (18, 20 and 22, 24, respectively) are provided on the outside of the centre piece (12), in each of which at least one of the measurement body holders (32, 34, 38, .40, 42, 44) is provided, and **in that** the holding surfaces (18, 20 and 22, 24, respectively) form a diametrically opposite holding surface pair and a measurement path (36, 46, 48) is defined by the measurement bodies (35) which are arranged in the opposite holding surfaces, and **in that** the holding surfaces (18, 20 and 22, 24, respectively) run parallel to one another and are arranged at an angle to a longitudinal axis (26) of the centre piece (12).

5. Apparatus according to Claim 4 and Claim 2, **characterized in that** the holding surface (18, 20, 22, 24), together with the measurement body (35), is covered by the cap (66).

6. Use of the apparatus according to one of the preceding claims as a gas meter.

## Revendications

1. Dispositif de mesure de la vitesse d'écoulement et/ou du débit d'un fluide, comportant un capteur de mesure (11) qui est doté de brides de raccordement (14, 16) destinées au raccordement de tuyauteries pour le fluide, et d'une pièce médiane (12) tubulaire, au moins deux réceptions (32, 34, 38, 40, 42, 44) étant prévues sur la face extérieure de la pièce médiane pour la réception d'un corps de mesure (35) respectif agencé sous la forme d'un convertisseur à ultrasons, et une unité de traitement de signaux (56), la pièce médiane (12) comportant une zone de fixation (54) pour l'unité de traitement de signaux (56), des liaisons électriques (70, 72, 74) cheminant de façon couverte dans le capteur de mesure entre les corps de mesure (35) et l'unité de traitement de signaux (56), et la pièce médiane (12) étant réalisée d'un seul tenant avec les brides de raccordement (14, 16) et les réceptions (32, 34, 38, 40, 42, 44) de corps de mesure, **caractérisé en ce qu'**une zone de la paroi (76) de la pièce médiane (12) comporte une épaisseur suffisante pour que des perçages (58, 60, 62, 64) soient prévus dans cette zone de la paroi (76), à travers lesquels passent les liaisons (70, 72, 74), chaque perçage (58, 60, 62, 64) comportant une première extrémité ouverte vers l'extérieur dans la zone d'un corps de mesure (35) associé, et une deuxième extrémité ouverte vers l'extérieur dans la zone de l'unité de traitement de signaux (56).

2. Dispositif selon la revendication 1, **caractérisé en ce que** les corps de mesure (35) sont recouverts par au moins un capuchon (66), le capuchon (66) recouvrant de préférence également la liaison (70 ou 72 ou 74) faisant respectivement partie du corps de mesure (35), au moins sur une partie de sa longueur, à savoir à partir du corps de mesure (35) jusqu'à la première extrémité du perçage (58, 60, 62, 64) respectivement associé.

3. Dispositif selon l'une des revendications précédentes, **caractérisé en ce que** le capteur de mesure (11) est préfabriqué par un procédé de coulée.

4. Dispositif selon l'une des revendications précédentes, **caractérisé en ce qu'**au moins deux surfaces de réception (18, 20 ou 22, 24) sensiblement planes sont prévues sur la face extérieure de la pièce médiane (12), dans lesquelles est prévue au moins l'une des réceptions respectives (32, 34, 38, 40, 42, 44) de corps de mesure, **en ce que** les surfaces de réception (18, 20 ou 22, 24) diamétralement opposées forment un couple de surfaces de réception, **en ce qu'**une voie de mesure (36, 46, 48) est définie par les corps de mesure (35) disposés dans les surfaces de réception opposées, et **en ce que** les surfaces de réception (18, 20 ou 22, 24) s'étendent parallèlement entre elles, et sont positionnées suivant un angle par rapport à un axe longitudinal (26) de la pièce médiane (12).

5. Dispositif selon la revendication 4 et la revendication 2, **caractérisé en ce que** la surface de réception (18, 20, 22, 24) est recouverte conjointement avec le corps de mesure (35) par le capuchon (66).

6. Utilisation du dispositif selon l'une des revendications précédentes en tant que compteur à gaz.
